# EUROPÄISCHE PATENTANMELDUNG

(11) **EP 4 614 073 A1**
(43) Veröffentlichungstag der Anmeldung: **10.09.2025**
(21) Anmeldenummer: 25161981.3
(22) Anmeldetag: 06.03.2025
(51) Int. Cl.: F24C 14/00, F24C 15/32, F24C 7/08

(54) **VERFAHREN ZUR REINIGUNG EINES BESCHWADUNGSSYSTEMS, BESCHWADUNGSSYSTEM FÜR EIN GARGERÄT UND GARGERÄT MIT EINEM GARRAUM**

(30) Priorität: 07.03.2024 DE 102024106522
(71) Anmelder: Miele & Cie. KG, 33332 Gütersloh (DE)
(72) Erfinder: Kinzel, Martin, 59320 Ennigerloh (DE); Render, Joachim, 48231 Warendorf (DE); Kulemin, Eugen, 59269 Beckum (DE); Becker, Torben, 59302 Oelde (DE)

(57) **Zusammenfassung**

Die Erfindung betrifft ein Verfahren zur Reinigung eines Beschwadungssystems (2) eines Gargeräts mit einem Garraum (4) mit den folgenden Verfahrensschritten: Befüllen eines Tanks (6) mit einer Reinigungssäure, solange, bis die Reinigungssäure mittels einer ein Absperrventil (18) aufweisenden Überlaufleitung (16) von dem Tank (6) in den Garraum (4) überläuft; Umwälzen der Reinigungssäure von dem Tank (6) in einen Dampferzeuger (14) und zurück; Befüllen des Tanks (6) mit Frischwasser bei geschlossenem Absperrventil (18) und ausgeschaltetem Dampferzeuger (14), solange, bis die Reinigungssäure mittels des Frischwassers in eine mit dem Dampferzeuger (14) und der Überlaufleitung (16) strömungsleitend verbundene Bypassleitung (20) in den Garraum (4) verdrängt worden ist; Befüllen des Tanks (6) mit Luft bei geschlossenem Absperrventil (18), solange, bis das Frischwasser mittels der Bypassleitung (20) in den Garraum (4) verdrängt worden ist; Benetzung der Pumpe (10) mit einer vorher festgelegten Menge an Frischwasser, wobei die Menge an Frischwasser lediglich zur Benetzung der Pumpe (10) ausgelegt ist; Verdampfen einer in dem Beschwadungssystem (2) stromabwärts der Pumpe (10) befindlichen Restwassermenge mittels des Dampferzeugers (14) bei geöffnetem Absperrventil (18).

Ferner betrifft die Erfindung ein Beschwadungssystem (2) und ein Gargerät.

## Beschreibung

Die Erfindung betrifft ein Verfahren zur Reinigung eines Beschwadungssystems eines Gargeräts mit einem Garraum, ein Beschwadungssystem und ein Gargerät mit einem Garraum.

Derartige Verfahren, Beschwadungssysteme und Gargeräte sind aus dem Stand der Technik in einer Vielzahl von Ausführungsformen, beispielsweise aus den Druckschriften DE 10 2007 048 567 A1 und DE 10 2019 125 135 A1 und US 2020 / 0 191 404 A1 bereits vorbekannt.

Der Erfindung stellt sich somit das Problem, ein Verfahren zur Reinigung eines Beschwadungssystems eines Gargeräts mit einem Garraum, ein Beschwadungssystem und ein Gargerät mit einem Garraum zu verbessern.

Erfindungsgemäß wird dieses Problem durch ein Verfahren mit den Merkmalen des Patentanspruchs 1 gelöst. Ferner wird dieses Problem durch ein Beschwadungssystem mit den Merkmalen des Patentanspruchs 5 und durch ein Gargerät mit den Merkmalen des Patentanspruchs 9 gelöst. Der Begriff "Reinigung" ist hier weit auszulegen und umfasst insbesondere auch das Entkalken des erfindungsgemäßen Beschwadungssystems. Vorteilhafte Ausgestaltungen und Weiterbildungen der Erfindung ergeben sich aus den nachfolgenden Unteransprüchen.

Der mit der Erfindung erreichbare Vorteil besteht insbesondere darin, dass ein Verfahren zur Reinigung eines Beschwadungssystems eines Gargeräts mit einem Garraum, ein Beschwadungssystem und ein Gargerät mit einem Garraum verbessert sind. Aufgrund der erfindungsgemäßen Ausbildung des Verfahrens, des Beschwadungssystems und des Gargeräts ist die Reinigung eines Beschwadungssystems eines Gargeräts mit einem Garraum auf konstruktiv, fertigungstechnisch und schaltungstechnisch sehr einfache Art und Weise wesentlich verbessert. Ferner ist das erfindungsgemäße Beschwadungssystem und damit das erfindungsgemäße Gargerät mittels des erfindungsgemäßen Verfahrens auch über eine lange Standzeit des erfindungsgemäßen Gargeräts funktionssicher betreibbar. Bei herkömmlichen Verfahren, Beschwadungssystemen und Gargeräten mit Garräumen ist das übliche Abpumpen oder auch Ablassen der gesättigten Reinigungssäure aufgrund von in der Reinigungssäure befindlichen festen Schwebeteilchen grundsätzlich kritisch. Dies gilt insbesondere für baulich kleine Beschwadungssysteme. Hierbei kommt es zum Beispiel häufig zu Undichtigkeiten bei Ventilen sowie zu Schädigungen an Pumpen. Hier schafft die Erfindung Abhilfe. Ferner ist durch die Erfindung erreicht, ein entsprechendes Verfahren und Beschwadungssystem anzugeben, bei denen eine zusätzliche Pumpe zum Abpumpen der gesättigten Reinigungssäure sowie ein zusätzlicher Ablauf in den Garraum zur Ausschleusung der gesättigten Reinigungssäure aus dem Beschwadungssystem entfallen können. Darüber hinaus ist die Erfindung geeignet, um die Lebensdauer, also die Gesamteinsatzzeit, der einzelnen Komponenten des Beschwadungssystems wesentlich zu verlängern. Dies deshalb, weil einerseits die lediglich einzige Pumpe des erfindungsgemäßen Beschwadungssystems ausschließlich reine Reinigungssäure, also Reinigungssäure ohne Festpartikel, reines Frischwasser und reine Luft fördert und andererseits das lediglich einzige Absperrventil nur nach vorheriger Benetzung mit Flüssigkeit für kurze Zeit angesteuert wird.

Grundsätzlich sind das erfindungsgemäße Verfahren, das erfindungsgemäße Beschwadungssystem und das erfindungsgemäße Gargerät in weiten geeigneten Grenzen frei wählbar. Beispielsweise kann es sich bei dem erfindungsgemäßen Gargerät um ein Haushaltsgerät oder um ein professionelles Gerät, also ein Gargerät für den gewerblichen Einsatz, handeln.

Eine vorteilhafte Weiterbildung des erfindungsgemäßen Verfahrens sieht vor, dass die Reinigungssäure als Zitronensäure und/oder das Frischwasser als Leitungswasser und/oder die Luft als Umgebungsluft ausgebildet sind/ist. Auf diese Weise handelt es sich einerseits um eine für den Reinigungserfolg, insbesondere für die Entkalkung, sehr geeignete Reinigungssäure. Ferner ist Zitronensäure bei Gargeräten mit Garraum zum Garen von Lebensmitteln bedenkenlos einsetzbar. Andererseits sind als Leitungswasser ausgebildetes Frischwasser und als Umgebungsluft ausgebildete Luft vor Ort leicht verfügbar.

Eine weitere vorteilhafte Weiterbildung des erfindungsgemäßen Verfahrens sieht vor, dass das Umwälzen der Reinigungssäure lediglich mittels des Dampferzeugers erfolgt, bevorzugt, dass der Dampferzeuger derart mit kurzen Heizimpulsen betrieben wird, dass eine thermische Umwälzung der Reinigungssäure erfolgt. Hierdurch ist das erfindungsgemäße Beschwadungssystem auf konstruktiv, fertigungstechnisch und schaltungstechnisch besonders einfache Weise realisierbar. Dies gilt besonders für die bevorzugte Ausführungsform dieser Weiterbildung.

Zur Benetzung der Pumpe mit Frischwasser wird eine geringe Menge Frischwasser benötigt, gerade derart viel, dass die innere Oberfläche der Pumpe feucht gehalten ist. Bei der vorliegenden Erfindung wird der Begriff "Benetzen" oder "Benetzung" verstanden als "nass machen, befeuchten".

Eine andere vorteilhafte Weiterbildung des erfindungsgemäßen Verfahrens sieht vor, dass die vorher festgelegte Menge an Frischwasser zur Benetzung der Pumpe kleiner oder gleich 50 ml, bevorzugt kleiner oder gleich 40 ml, besonders bevorzugt kleiner oder gleich 30 ml, beträgt. Auf diese Weise ist die Menge an Frischwasser, die in diesem konkreten Verfahrensschritt des erfindungsgemäßen Verfahrens dem erfindungsgemäßen Beschwadungssystem zugeführt wird, auf ein Minimum beschränkt, ohne dabei die Funktion des erfindungsgemäßen Verfahrens und die Langlebigkeit des erfindungsgemäßen Beschwadungssystems zu beeinträchtigen.

Wie oben bereits angedeutet, ist das erfindungsgemäße Beschwadungssystem nach Art, Funktionsweise, Material und Dimensionierung in weiten geeigneten Grenzen frei wählbar. Zweckmäßigerweise umfasst das Beschwadungssystem die folgenden Komponenten in der angegebenen Anordnung: einen Tank, eine mit dem Tank strömungsleitend verbundene Befüllleitung mit einer Pumpe zur Befüllung des Tanks mit einem Fluid, einen mit dem Tank mittels einer Verbindungsleitung strömungsleitend verbundenen Dampferzeuger, eine Überlaufleitung mit einem Absperrventil zur strömungsleitenden Verbindung des Tanks mit dem Garraum und eine mit dem Tank, mit dem Dampferzeuger und mit der Überlaufleitung strömungsleitend verbundene Bypassleitung zur strömungsleitenden Verbindung mit dem Garraum des Gargeräts.

Eine vorteilhafte Weiterbildung der vorgenannten Ausführungsform des erfindungsgemäßen Beschwadungssystems sieht vor, dass die Befüllleitung mit der Pumpe an einer Oberseite des Tanks mit dem Tank strömungsleitend verbunden ist und/oder, dass der Dampferzeuger einerseits an einer an die Oberseite direkt anschließenden Position einer Seite des Tanks und andererseits an einer Unterseite des Tanks mit dem Tank strömungsleitend verbunden ist und/oder, dass die Überlaufleitung an der Oberseite des Tanks mit dem Tank strömungsleitend verbunden ist und/oder, dass die Bypassleitung an der Unterseite mit dem Tank strömungsleitend verbunden ist. Hierdurch sind die einzelnen strömungsleitenden Verbindungen zwischen den einzelnen Komponenten des erfindungsgemäßen Beschwadungssystems auf besonders funktionale Art und Weise umgesetzt.

Eine weitere vorteilhafte Weiterbildung des erfindungsgemäßen Beschwadungssystems nach Anspruch 6 oder 7 sieht vor, dass das Absperrventil als ein Quetschventil ausgebildet ist. Quetschventile sind, mangels beweglicher Teile, die zum Beispiel mit der Reinigungssäure in Kontakt sind, sehr verschleiß- und damit wartungsarm. Entsprechend reduzieren sich einerseits die Betriebskosten und andererseits verlängert sich die Standzeit des Absperrventils, also dessen Lebenszeit. Grundsätzlich sind jedoch auch andere Arten und Funktionsweisen von Ventilen für das Absperrventil denkbar.

Ein Ausführungsbeispiel der Erfindung ist in den Zeichnungen rein schematisch dargestellt und wird nachfolgend näher beschrieben. Es zeigt
- Figur 1: ein Ausführungsbeispiel des erfindungsgemäßen Gargeräts mit dem erfindungsgemäßen Beschwadungssystem zur Durchführung des erfindungsgemäßen Verfahrens in einem Verfahrensschaltbild,
- Figur 2 bis 7: das Ausführungsbeispiel in jeweils analoger Darstellung zur Fig. 1, während der einzelnen Verfahrensschritte.

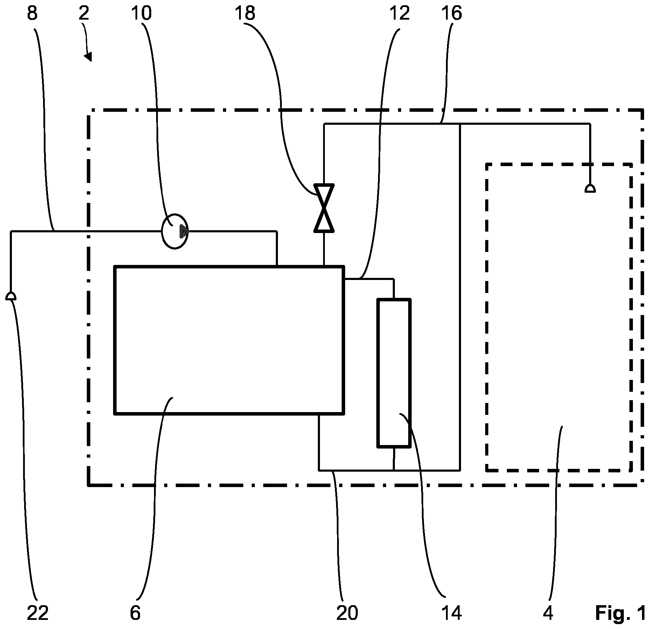

In den Fig. 1 bis 7 ist ein Ausführungsbeispiel des erfindungsgemäßen Gargeräts mit dem erfindungsgemäßen Beschwadungssystem zur Durchführung des erfindungsgemäßen Verfahrens rein exemplarisch dargestellt.

Das Beschwadungssystem 2 für ein nicht näher dargestelltes und als Haushalts-Dampfgarer ausgebildetes Gargerät mit einem Garraum 4 umfasst einen Tank 6, eine mit dem Tank 6 strömungsleitend verbundene Befüllleitung 8 mit einer Pumpe 10 zur Befüllung des Tanks 6 mit einem Fluid, einen mit dem Tank 6 mittels einer Verbindungsleitung 12 strömungsleitend verbundenen Dampferzeuger 14, eine Überlaufleitung 16 mit einem Absperrventil 18 zur strömungsleitenden Verbindung des Tanks 6 mit dem Garraum 4 und eine mit dem Tank 6, mit dem Dampferzeuger 14 und mit der Überlaufleitung 16 strömungsleitend verbundene Bypassleitung 20 zur strömungsleitenden Verbindung mit dem Garraum 4 des Gargeräts. Das nicht näher dargestellte Gargerät ist in den Fig. 1 bis 7 mittels einer strichpunktierten Linie angedeutet. Der in den Fig. 1 bis 7 mit einer gestrichelten Linie dargestellte Garraum 4 zählt im engeren Sinn nicht zu dem Beschwadungssystem 2.

Wie aus den Fig. 1 bis 7 ferner hervorgeht, ist die Befüllleitung 8 mit der Pumpe 10 an einer Oberseite des Tanks 6 mit dem Tank 6 strömungsleitend verbunden, der Dampferzeuger 14 einerseits an einer an die Oberseite direkt anschließenden Position einer Seite des Tanks 6 und andererseits an einer Unterseite des Tanks 6 mit dem Tank 6 strömungsleitend verbunden, die Überlaufleitung 16 an der Oberseite des Tanks 6 mit dem Tank 6 strömungsleitend verbunden und die Bypassleitung 20 an der Unterseite mit dem Tank 6 strömungsleitend verbunden. Das Absperrventil 18 ist bei dem vorliegenden Ausführungsbeispiel als ein Quetschventil ausgebildet.

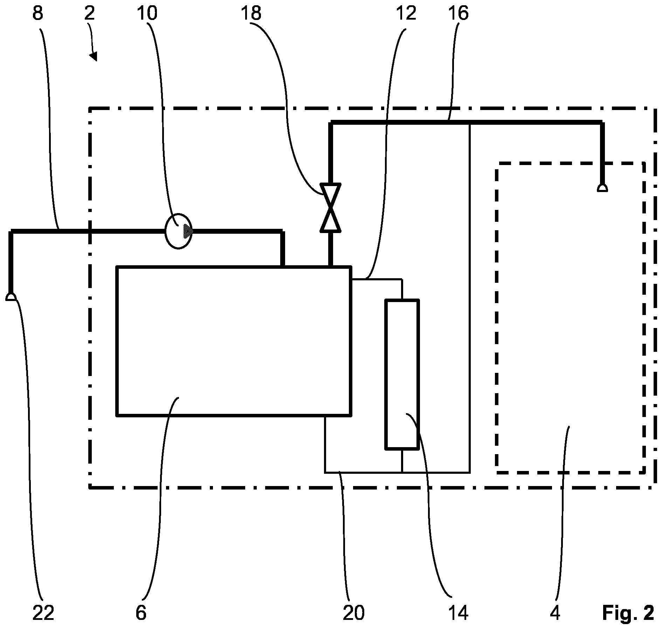

Im Nachfolgenden werden das erfindungsgemäße Verfahren sowie die Funktionsweise des erfindungsgemäßen Gargeräts mit dem erfindungsgemäßen Beschwadungssystem gemäß dem vorliegenden Ausführungsbeispiel anhand der Fig. 1 bis 7 näher erläutert. In dem jeweiligen Verfahrensschritt von einem Fluid durchströmte strömungsleitende Verbindungen sind in den Fig. 2 bis 7 durch eine dicke durchgezogene Linie symbolisiert.

In einem ersten Verfahrensschritt wird der Tank 6 des Beschwadungssystems 2 mittels der Befüllleitung 6 und der Pumpe 8 des Beschwadungssystems 2 mit einer Reinigungssäure, nämlich Zitronensäure, solange befüllt, bis die Reinigungssäure mittels der das Absperrventil 18 aufweisenden Überlaufleitung 16 des Beschwadungssystems 2 von dem Tank 2 in den Garraum 4 überläuft. Siehe hierzu die Fig. 2. Das Absperrventil 18 ist dabei geöffnet. Die Reinigungssäure ist in den Fig. 1 bis 7 nicht explizit dargestellt. Zwecks der vorgenannten Befüllung des Tanks 6 mit der Reinigungssäure weist die Befüllleitung 8 stromaufwärts der Pumpe 10, nämlich an deren freien Ende, einen Einfüllstutzen 22 auf. Beispielsweise kann der Einfüllstutzen 22 in ein mit der Reinigungssäure befülltes Gefäß eingetaucht werden, so dass die Pumpe 10 die Reinigungssäure aus dem Gefäß ansaugen kann.

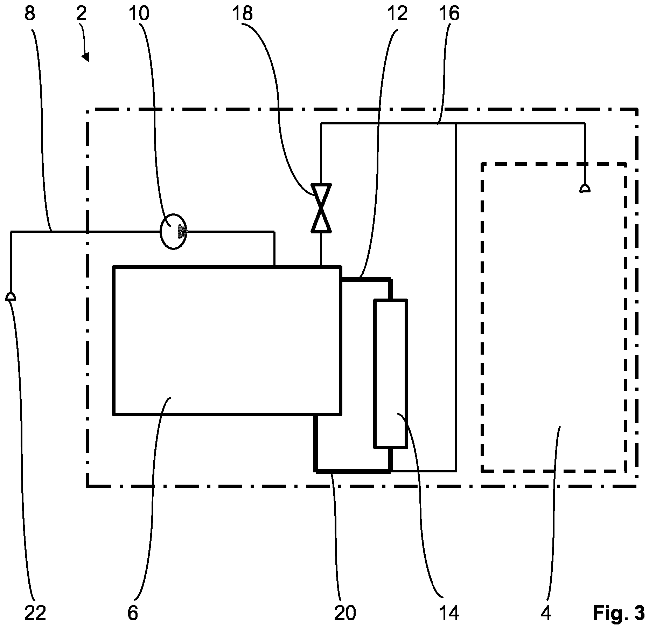

In einem in der Fig. 3 dargestellten zweiten Verfahrensschritt wird die Reinigungssäure von dem Tank 6 in den Dampferzeuger 14 des Beschwadungssystems 2 und zurück umgewälzt. Das Umwälzen der Reinigungssäure erfolgt hier lediglich mittels des Dampferzeugers 14, nämlich derart, dass der Dampferzeuger 14 mit kurzen Heizimpulsen betrieben wird, so dass eine thermische Umwälzung der Reinigungssäure erfolgt.

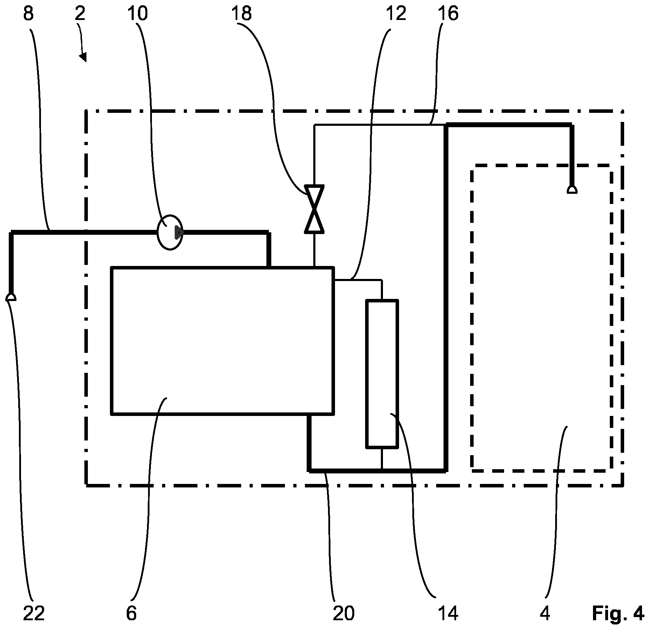

Anschließend wird der Tank 6 in einem dritten Verfahrensschritt mittels der Befüllleitung 8 und der Pumpe 10 bei geschlossenem Absperrventil 18 und ausgeschaltetem Dampferzeuger 14 solange mit Frischwasser befüllt, bis die Reinigungssäure mittels des Frischwassers in die mit dem Dampferzeuger 14 und der Überlaufleitung 16 strömungsleitend verbundene Bypassleitung 20 in den Garraum 4 verdrängt worden ist. Siehe hierzu die Fig. 4. Bei dem nicht explizit dargestellten Frischwasser handelt es sich um Leitungswasser, das analog zu der Reinigungssäure mittels eines damit befüllten Gefäßes und dem Einfüllstutzen 22 in das Beschwadungssystem 2 einfüllbar ist.

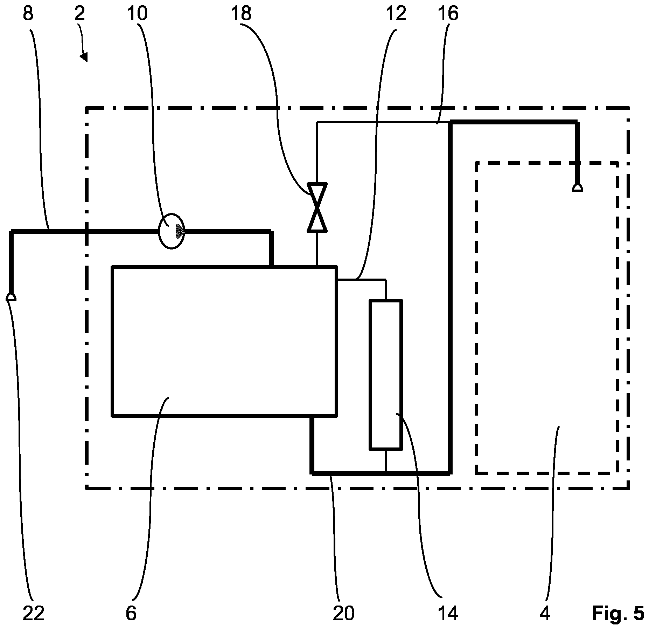

In der Fig. 5 ist ein vierter Verfahrensschritt gezeigt, in dem der Tank 6 mittels der Befüllleitung 8 und der Pumpe 10 bei geschlossenem Absperrventil 18 solange mit Luft befüllt wird, bis das Frischwasser mittels der Bypassleitung 20 in den Garraum 4 verdrängt worden ist. Bei der Luft handelt es sich um Umgebungsluft, die mittels des Einfüllstutzens 22 in das Beschwadungssystem 2 einfüllbar ist.

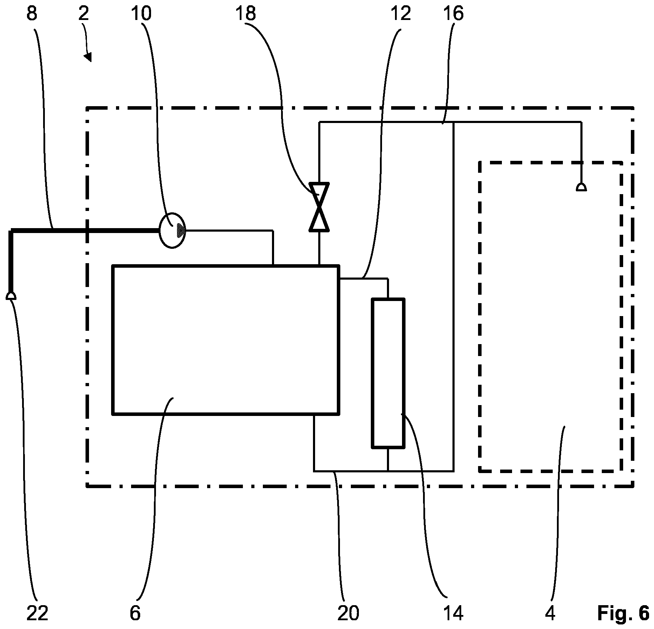

In einem fünften Verfahrensschritt wird die Pumpe 10 mittels der Befüllleitung 8 und der Pumpe 10 mit einer vorher festgelegten Menge an Frischwasser benetzt, wobei die Menge an Frischwasser lediglich zur Benetzung der Pumpe 10 ausgelegt ist. Diese vorher festgelegte Menge an Frischwasser zur Benetzung der Pumpe 10 beträgt hier lediglich 30 ml. Siehe hierzu die Fig. 6. Die Benetzung der Pumpe 10 mit Frischwasser erfolgt analog zu dem dritten Verfahrensschritt.

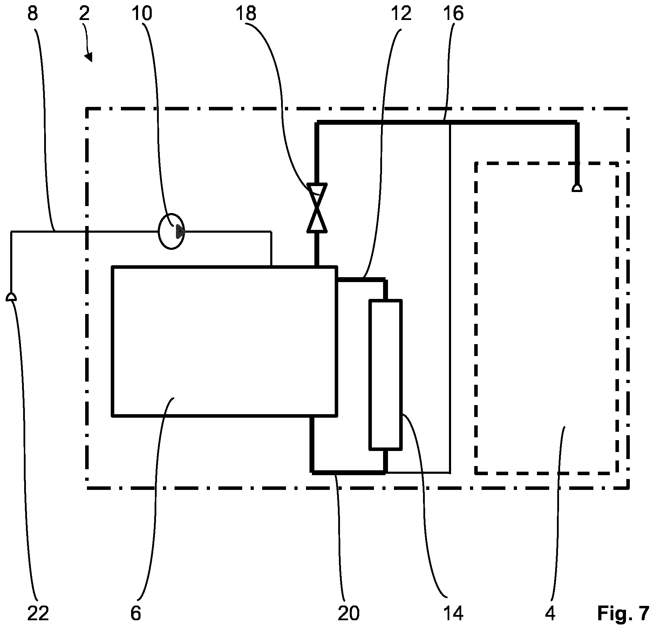

Schließlich wird in einem sechsten Verfahrensschritt eine in dem Beschwadungssystem 2 stromabwärts der Pumpe 10 befindliche Restwassermenge mittels des Dampferzeugers 14 bei geöffnetem Absperrventil 18 verdampft. Siehe hierzu die Fig. 7.

Aufgrund der erfindungsgemäßen Ausbildung des Verfahrens, des Beschwadungssystems 2 und des Gargeräts ist die Reinigung des Beschwadungssystems 2 auf konstruktiv, fertigungstechnisch und schaltungstechnisch sehr einfache Art und Weise wesentlich verbessert. Ferner ist das Beschwadungssystem 2 mittels des angewendeten Verfahrens auch über eine lange Standzeit des Gargeräts funktionssicher betreibbar. Dies gilt insbesondere für baulich kleine Beschwadungssysteme, wie dies bei dem vorliegenden Beschwadungssystem 2 der Fall ist. Ferner ist erreicht, dass eine zusätzliche Pumpe zum Abpumpen der gesättigten Reinigungssäure sowie ein zusätzlicher Ablauf in den Garraum 4 zur Ausschleusung der gesättigten Reinigungssäure aus dem Beschwadungssystem 2, im Vergleich zum Stand der Technik, entfallen kann. Darüber hinaus ist die Lebensdauer, also die Gesamteinsatzzeit, der einzelnen Komponenten des Beschwadungssystems 2 im Vergleich zu herkömmlichen Systemen und damit ausgestatteten Gargeräten wesentlich verlängert. Dies deshalb, weil einerseits die lediglich einzige Pumpe 10 des Beschwadungssystems 2 ausschließlich reine Reinigungssäure, also Reinigungssäure ohne Festpartikel, reines Frischwasser und reine Luft fördert und andererseits das lediglich einzige Absperrventil 18 nur nach vorheriger Benetzung mit Flüssigkeit für kurze Zeit angesteuert wird.

Die Erfindung ist jedoch nicht auf das vorliegende Ausführungsbeispiel beschränkt. Siehe hierzu beispielsweise die diesbezüglichen Ausführungen in der Beschreibungseinleitung.

## Patentansprüche

1. Verfahren zur Reinigung eines Beschwadungssystems (2) eines Gargeräts mit einem Garraum (4), wonach das Verfahren die folgenden Verfahrensschritte in der angegebenen Reihenfolge aufweist:
- Befüllen eines Tanks (6) des Beschwadungssystems (2) mit einer Reinigungssäure mittels einer Befüllleitung (8) und einer Pumpe (10) des Beschwadungssystems (2), solange, bis die Reinigungssäure mittels einer ein Absperrventil (18) aufweisenden Überlaufleitung (16) des Beschwadungssystems (2) von dem Tank (6) in den Garraum (4) überläuft;
- Umwälzen der Reinigungssäure von dem Tank (6) in einen Dampferzeuger (14) des Beschwadungssystems (2) und zurück;
- Befüllen des Tanks (6) mit Frischwasser mittels der Befüllleitung (8) und der Pumpe (10) bei geschlossenem Absperrventil (18) und ausgeschaltetem Dampferzeuger (14), solange, bis die Reinigungssäure mittels des Frischwassers in eine mit dem Dampferzeuger (14) und der Überlaufleitung (16) strömungsleitend verbundene Bypassleitung (20) in den Garraum (4) verdrängt worden ist;
- Befüllen des Tanks (6) mit Luft mittels der Befüllleitung (8) und der Pumpe (10) bei geschlossenem Absperrventil (18), solange, bis das Frischwasser mittels der Bypassleitung (20) in den Garraum (4) verdrängt worden ist;
- Benetzung der Pumpe (10) mit einer vorher festgelegten Menge an Frischwasser - mittels der Befüllleitung (8) und der Pumpe (10), wobei die Menge an Frischwasser lediglich zur Benetzung der Pumpe (10) ausgelegt ist;
- Verdampfen einer in dem Beschwadungssystem (2) stromabwärts der Pumpe (10) befindlichen Restwassermenge mittels des Dampferzeugers (14) bei geöffnetem Absperrventil (18).

2. Verfahren nach Anspruch 1, **dadurch gekennzeichnet, dass** die Reinigungssäure als Zitronensäure und/oder das Frischwasser als Leitungswasser und/oder die Luft als Umgebungsluft ausgebildet sind/ist.

3. Verfahren nach Anspruch 1 oder 2, **dadurch gekennzeichnet, dass** das Umwälzen der Reinigungssäure lediglich mittels des Dampferzeugers (14) erfolgt, bevorzugt, dass der Dampferzeuger (14) derart mit kurzen Heizimpulsen betrieben wird, dass eine thermische Umwälzung der Reinigungssäure erfolgt.

4. Verfahren nach einem der Ansprüche 1 bis 3, **dadurch gekennzeichnet, dass** die vorher festgelegte Menge an Frischwasser zur Benetzung der Pumpe (10) kleiner oder gleich 50 ml, bevorzugt kleiner oder gleich 40 ml, besonders bevorzugt kleiner oder gleich 30 ml, beträgt.

5. Beschwadungssystem (2) für ein Gargerät mit einem Garraum (4), **dadurch gekennzeichnet, dass** das Beschwadungssystem (2) zur Durchführung des Verfahrens nach einem der Ansprüche 1 bis 4 ausgebildet ist.

6. Beschwadungssystem (2) nach Anspruch 5, **dadurch gekennzeichnet, dass** das Beschwadungssystem (2) die folgenden Komponenten in der angegebenen Anordnung umfasst: einen Tank (6), eine mit dem Tank (6) strömungsleitend verbundene Befüllleitung (8) mit einer Pumpe (10) zur Befüllung des Tanks (6) mit einem Fluid, einen mit dem Tank (6) mittels einer Verbindungsleitung (12) strömungsleitend verbundenen Dampferzeuger (14), eine Überlaufleitung (16) mit einem Absperrventil (18) zur strömungsleitenden Verbindung des Tanks (6) mit dem Garraum (4) und eine mit dem Tank (6), mit dem Dampferzeuger (14) und mit der Überlaufleitung (16) strömungsleitend verbundene Bypassleitung (20) zur strömungsleitenden Verbindung mit dem Garraum (4) des Gargeräts.

7. Beschwadungssystem (2) nach Anspruch 6, **dadurch gekennzeichnet, dass** die Befüllleitung (8) mit der Pumpe (10) an einer Oberseite des Tanks (6) mit dem Tank (6) strömungsleitend verbunden ist und/oder, dass der Dampferzeuger (14) einerseits an einer an die Oberseite direkt anschließenden Position einer Seite des Tanks (6) und andererseits an einer Unterseite des Tanks (6) mit dem Tank (6) strömungsleitend verbunden ist und/oder, dass die Überlaufleitung (16) an der Oberseite des Tanks (6) mit dem Tank (6) strömungsleitend verbunden ist und/oder, dass die Bypassleitung (20) an der Unterseite mit dem Tank (6) strömungsleitend verbunden ist.

8. Beschwadungssystem (2) nach Anspruch 6 oder 7, **dadurch gekennzeichnet, dass** das Absperrventil (18) als ein Quetschventil ausgebildet ist.

9. Gargerät mit einem Garraum (4) und mit einem Beschwadungssystem (2) zur Beschwadung des Garraums (4) mit Dampf, **dadurch gekennzeichnet, dass** das Beschwadungssystem (2) nach einem der Ansprüche 5 bis 8 ausgebildet ist.
